# EUROPEAN PATENT APPLICATION

(11) **EP 4 847 224 A1**
(43) Date of publication of application: **02.12.2026**
(21) Application number: 25745046.0
(22) Date of filing: 21.01.2025
(51) Int. Cl.: B29B 17/04, B02C 1/02, B02C 4/00, B02C 13/00, B02C 13/18, B02C 18/00, B02C 19/00, B29B 9/04, C08J 3/12, C08K 7/02, C08L 75/04, C08L 101/00

(54) **RECYCLED FIBER-REINFORCED RESIN, RECYCLED RESIN COMPOSITION, RECYCLED RESIN MOLDED BODY, AND METHOD FOR PRODUCING SAME**

(30) Priority: 22.01.2024 JP 2024007212; 10.02.2024 JP 2024019045
(71) Applicant: Hirokou Co., Ltd., Yokohama-shi, Kanagawa 232-0064 (JP)
(72) Inventor: TAKAYA, Tokiyoshi, Yokohama-shi, Kanagawa 232-0064 (JP)
(74) Representative: Plasseraud IP
(86) International application number: PCT/JP2025/001660
(87) International publication number: WO 2025/159062

(57) **Abstract**

This invention solves the problems in recycling a dismantled wind-turbine blade, and provides a recycling system for a dismantled wind-turbine blade. A method for producing a recycled fiber-reinforced resin includes: a cutting step S1 of cutting, at a waste plastic material dismantling site, a waste plastic material being derived from at least one selected from the group consisting of wind-turbine blades, bathtubs, and hulls and containing a fiber-reinforced resin into a substantially plate-shaped member of a size ranging from 50 cm square to 1 m square; a crushing step S2 of transporting the substantially plate-shaped member to a resin production facility and pulverizing it at the production facility; and steps S4,S5 of kneading/molding a recycled fiber-reinforced resin and a thermoplastic resin, the crushing step S2 pulverizing the substantially plate-shaped member in multiple stages into pulverized pieces of a final average particle size of 10 µm to 50 µm both inclusive.

## Description

### Technical Field

The present invention relates to a recycled fiber-reinforced resin, a recycled resin composition, a recycled resin molded body, and a method for producing them.

### Background Art

Fiber-reinforced resins (fiber reinforced plastics; FRPs) are composite materials that are made of an unsaturated polyester resin or an epoxy resin dispersed with glass fibers or carbon fibers, which are reinforced fibers, and have significantly improved specific strength and specific modulus. Among FRPs, a glass fiber-reinforced resin (glass fiber reinforced plastic; GFRP) has excellent mechanical properties and chemical stability, and is less expensive. Furthermore, the glass fiber-reinforced resin is lighter in weight than metal materials, and can be mass-produced. Thus, GFRP is often used in bathtubs, hull materials, and the like.

However, the high chemical stability of GFRP, which is an advantage, is also a disadvantage. Unsaturated polyester resin and epoxy resin each of which can constitute GFRP are types of thermosetting resins, and form an irreversible three-dimensional structure involving a cross-linking reaction during molding. Once the three-dimensional structure is formed, this type of resin can no longer be converted back to its original liquid state of the raw material by a general treatment such as heating or a treatment involving use of a solvent. Therefore, GFRP that has reached the end of its service life is difficult to recycle and is typically incinerated and/or landfilled as industrial waste.

Nevertheless, in line with environmental protection trends such as the Sustainable Development Goals (SDGs), researches on recycling of GFRP have advanced in recent years. The recycling of GFRP is being researched from the viewpoints of material recycling and chemical recycling.

In the material recycling, a discarded material undergoes physical and/or mechanical processing so as to be used as an additive in other materials. As such a technique, a method for finely pulverizing a waste GFRP material so as to be reused as a filler for cement has been practically used. Furthermore, such a technique has been proposed in which ultra-finely pulverized pieces of a waste thermosetting plastic (waste FRP) are used as a filler for a waste thermoplastic plastic (polypropylene; PP) to produce pellets for injection molding and the pellets thus produced are used as a plastic material for injection molding (Non-Patent Literature 1).

In the chemical recycling, a waste GFRP material undergoes a chemical treatment so that an unsaturated polyester resin is decomposed into raw material components and is then made into low molecular weight components and to be liquefied. Consequently, glass fibers, which are a reinforcing material, are separated and collected. Then, the resin raw materials and the separated glass fibers are reused as raw materials for new GFRP. However, this technique involves a problem of high processing cost. Thus, although research-level studies are progressing, the chemical recycling is not as widely used as the material recycling at present.

### Citation List

### Patent Literature

Non-Patent Literature 1
Satou et al., "Hai-FRP no risaikuru gijutsu to sono youto gijutsu kaihatsu (Recycling Technique of Disposal FRP and Development of Application Technique Thereof)", Annual Research Report (1995), Oita Industrial Research Institute

### Summary of Invention

### Technical Problem

Incidentally, FRPs are used not only for the bathtubs and the boat hull materials but also for wind turbine blades for wind power plants. However, the diameter of a wind turbine blade is approximately 80 m, and a weight of a single blade is as much as approximately 5 tons. In addition, wind power generation is typically performed in remote locations. Therefore, optimization is required in two aspects, specifically, an aspect of dismantling cost and an aspect of a cost associated with transportation from a dismantling site to a material recycling facility. In that regard, recycling the wind turbine blades is much more difficult than recycling the bathtubs or hull materials. In order to provide a recycling system for a dismantled wind turbine blade, existing recycling technologies alone are insufficient, and the problems in terms of dismantling efficiency must be solved.

The dismantled wind turbine blades include not only FRP but also wood chips. Thus, in order to reuse the dismantled wind turbine blade as a filler for cement, the wood chips contained therein can be an obstacle. From the viewpoint of efficiency, it is preferable to avoid removing the wood chips. Thus, the development of applications that do not require removal of the wood chips is required.

In Japan, more and more wind power plants have been constructed since 1995, and a total of 2,626 units are in operation (as of December 2022). Meanwhile, the number of wind power generators that reach the end of their service lives of approximately 20 years and that are to be dismantled and removed will be 72 in 2023 and will increase 100 to 200 annually thereafter. A single wind power generator is provided with three wind turbine blades. Thus, the weight of the wind turbine blades in a single wind power generator is approximately 15 tons. It is expected that approximately 1,500 tons of waste will be generated annually in Japan alone.

The wind power generation output in the European Union (EU) was 510 TWh in 2020, which is 65 times more than in Japan. Furthermore, offshore wind power generation, which uses massive wind turbines (windmills) installed on the sea to generate electricity, is being developed, and more and more wind power plants are being constructed primarily in the North Sea.

In view of such circumstances, establishment of a recycling system for a dismantled wind turbine blade is an urgent issue.

The present invention was made in consideration of the circumstances described above, and has an object to solve the problems associated with recycling a dismantled wind turbine blade and to establish a recycling system for a dismantled wind turbine blade.

### Solution to Problem

The inventors of the present invention reached the following finding. Specifically, by cutting a dismantled wind turbine blade into pieces of a predetermined size at a wind turbine dismantling site and then transporting these cut pieces to a recycled resin production site to pulverize the cut pieces there, it is possible to obtain a recycled fiber-reinforced resin having an average particle size of not less than 10 µm and not more than 50 µm. This can solve the problem of the weight of the wind turbine blade and the problem of the transportation from the wind power generation site to the facility. Based on this, the inventors completed the present invention. More specifically, the present invention provides the followings.

The present invention is a method for producing a recycled fiber-reinforced resin, the method including: a cutting step of cutting, at a waste plastic material dismantling site, a waste plastic material into a substantially plate-shaped member of a size in a range from 50 cm square to 1 m square, the waste plastic material being derived from at least one selected from the group consisting of wind turbine blades, bathtubs, and hulls, and the waste plastic material containing a fiber-reinforced resin; and a crushing step of transporting the substantially plate-shaped member to a production facility of a resin and pulverizing the substantially plate-shaped member at the production facility, the crushing step pulverizing the substantially plate-shaped member in a plurality of stages into pulverized pieces of a final average particle size of not less than 10 µm and not more than 50 µm.

In accordance with the present invention, the waste plastic material is cut into a substantially plate-shaped member of a size of not more than 1 m square at the dismantling site. This enables loading/unloading of the waste plastic material to/from a vehicle in terms of the size and the weight, and thus can reduce the cost associated with the transportation from the dismantling site to the material recycling facility. Furthermore, since the size of the plate-shaped member is not less than 50 cm square, pieces of the blade crushed at the dismantling site can be quickly discharged. This prevents unnecessary extension of a construction period, thereby making it possible to reduce a dismantling cost. This enables optimization in two aspects, specifically, the aspect of the dismantling cost and the aspect of the cost associated with transportation from the dismantling site to the material recycling facility.

Consequently, in accordance with the present invention, it is possible to simultaneously solve the problem associated with the weight of the wind turbine blade and the problem associated with transportation from the wind power generation site to the facility, thereby making it possible to provide a recycling system for a dismantled wind turbine blade.

The present invention is preferably configured such that the crushing step includes a first crushing step of pulverizing the substantially plate-shaped member into pulverized pieces of an average particle size of not less than 20 mm and not more than 60 mm, a second crushing step of pulverizing the pulverized pieces obtained through the first crushing step into pulverized pieces of an average particle size of not less than 10 mm and not more than 50 mm, and a pulverizing step of pulverizing the pulverized pieces obtained through the second crushing step into pulverized pieces of an average particle size of not less than 10 µm and not more than 50 µm.

In accordance with the present invention, the cut pieces having a stable three-dimensional structure are pulverized in a plurality of stages. This can reduce damage to the crushing device.

The present invention is a method for producing a recycled resin composition, the method including: a kneading and molding step of kneading a kneading subject and thereafter feeding the kneading subject to an extruder or a compressor, the kneading subject at least containing not less than 20 mass% and not more than 30 mass% of the recycled fiber-reinforced resin and not less than 65 mass% and not more than 78 mass% of a plastic resin. Further, the present invention is a method for producing a recycled resin composition, the method including: a kneading step of kneading, by using an extruder, a kneading subject containing not less than 20 mass% and not more than 30 mass% of the recycled fiber-reinforced resin and not less than 65 mass% and not more than 78 mass% of a plastic resin. In this method, the plastic resin preferably contains a resin having been used in at least one selected from the group consisting of wind power plants, bathrooms, and a ship interior.

The recycled fiber-reinforced resin has a drawback of being too hard for easy recycling. Meanwhile, in accordance with the present invention, the recycled fiber-reinforced resin is mixed with the plastic resin. This allows the resulting mixture to be kneaded uniformly by using the extruder. This makes it possible to solve the problem that FRP being too hard to be recycled easily.

The present invention is a method for producing a recycled resin composition, wherein: the kneading subject contains a virgin thermoplastic resin produced from a raw material.

By mixing the virgin thermoplastic resin, which is produced from a raw material, with the recycled fiber-reinforced resin and the plastic resin, it is possible to further enhance the thermoplastic property. This facilitates uniform kneading with the extruder, which can solve the problem that FRP being too hard to be recycled easily. An object of the present invention is to effectively utilize used-FRP to convert a thermoplastic resin molded product into an inexpensive recycled fiber-reinforced resin. Therefore, the kneading subject may be either virgin one or recycled one, provided that it is a thermoplastic resin.

The fiber-reinforced resin derived from at least one selected from the group consisting of wind turbine blades, bathtubs, and hulls contains at least one type of impurity component selected from the group consisting of wood components, anticorrosive coating components, urethane components, and rubber components. In accordance with the present invention, the recycled fiber-reinforced resin functions as a filler for the plastic resin. Therefore, unlike a case where the recycled fiber-reinforced resin is reused as a filler for cement, the presence of a small amount of the impurity component would not adversely affect the recycled resin composition.

In addition, since the recycled fiber-reinforced resin has high strength, it is possible to enhance the strength of the recycled resin composition. That is, mixing of the recycled fiber-reinforced resin can achieve an additional value. Moreover, in a case where the waste plastic material is derived from a wind turbine, the recycled fiber-reinforced resin contains a wood component. A filler containing a wood component has an advantage of making it possible to reduce an amount of the plastic resin to be used. Therefore, the wood component, which is originally an impurity, can be regarded as an advantage. Similarly, a recycled fiber-reinforced resin containing a urethane component or a rubber component also has an advantage of making it possible to reduce an amount of the plastic resin to be used.

Therefore, in accordance with the present invention, it is possible to provide a recycling system for a dismantled wind turbine blade.

### Advantageous Effects of Invention

The present invention can solve the problems in recycling a dismantled wind turbine blade, and can provide a recycling system for a dismantled wind turbine blade.

### Brief Description of Drawings

Fig. 1 is a flowchart illustrating a method for producing a recycled fiber-reinforced resin, a recycled resin composition, and a resin molded body.
Fig. 2 is a side view illustrating arrangement of a production system.
Fig. 3 is a plan view illustrating arrangement of the production system.
Fig. 4 is an explanatory view of a cutting device.
Fig. 5 is a right side view of a cutting mechanism.
Fig. 6 is a front view of the cutting mechanism.
Fig. 7 is a bottom view of the cutting mechanism.
Fig. 8 is an explanatory view of the cutting device.
Fig. 9 is an explanatory view schematically illustrating a configuration of a powderization-grinding-separation device.
Fig. 10 is an explanatory view of a pulverizing mechanism.

### Description of Embodiments

The following will describe an example of a preferred embodiment for implementing the present invention. Note that this is merely an example, and the technical scope of the present invention is not limited to this.

### (Method for producing recycled fiber-reinforced resin)

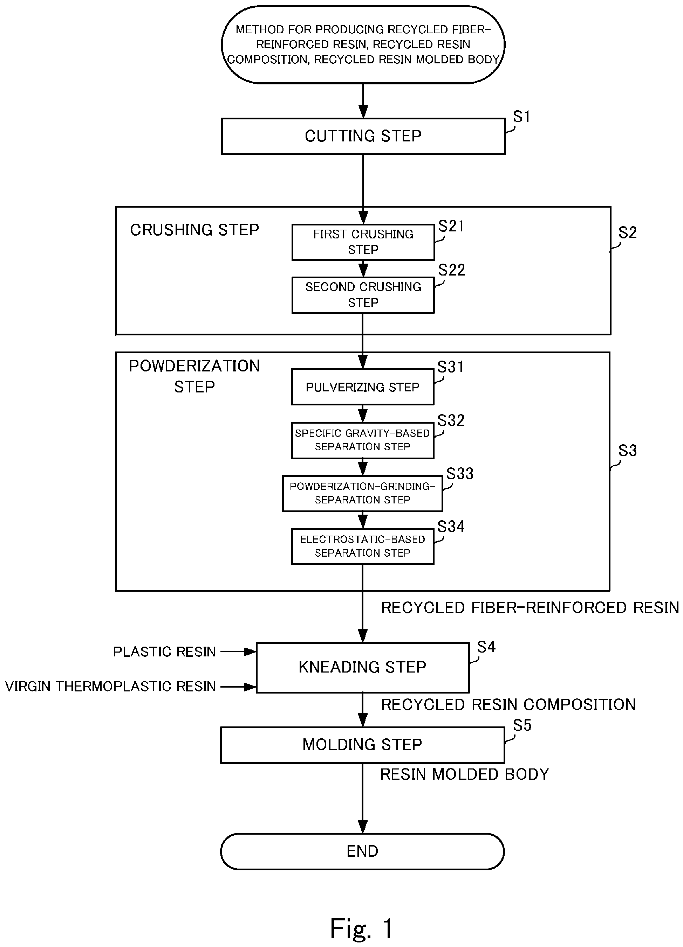

As shown in Fig. 1, a method for producing a recycled fiber-reinforced resin in accordance with the present embodiment includes: a cutting step S1 of cutting, at a waste plastic material dismantling site, a waste plastic material which contains a fiber-reinforced resin and which is difficult to transport while maintaining its original shape into a substantially plate-shaped member of a size in a range from 50 cm square to 1 m square; and a crushing step S2 of transporting the substantially plate-shaped member to a production facility of a resin and pulverizing the substantially plate-shaped member into pulverized pieces of an average particle size of not less than 10 µm and not more than 50 µm.

The "fiber-reinforced resin" refers to a composite material of fibers and resin. Examples of the fibers include glass fibers, carbon fibers, aramid fibers, and Kevlar (registered trademark) fibers. Examples of the resin include an epoxy resin, a polyester resin, and a phenolic resin. Thus, the method in accordance with the present embodiment for producing a recycled fiber-reinforced resin is one of recycling methods for all wastes using fiber-reinforced resins including a glass-fiber reinforced resin (glass-fiber reinforced plastic; G-FRP) and a carbon-fiber reinforced resin (carbon-fiber reinforced plastic; C-FRP) as well as materials thereof. The expression "difficult to transport while maintaining its original shape" means that transporting waste plastic materials while maintaining their original shapes requires a special transportation means due to factors such as weight and size. The "special transportation means" refers to large transportation equipment such as a large truck or a ship. The "waste plastic material" preferably contains a fiber-reinforced resin derived from at least one selected from the group consisting of wind turbine blades, bathtubs, and hulls. However, there is no particular limitation on the waste plastic material, as long as it is a member made of a fiber-reinforced resin. For example, the waste plastic material may be derived from at least one selected from the group consisting of, in addition to the wind turbine blades, the bathtubs, and the hulls, automobile components, aircraft components, construction materials, civil engineering materials, and sporting goods.

In the cutting step S1, the waste plastic material is cut into a substantially plate-shaped member of a size of not more than 1 m square at the dismantling site. This is performed for the following reasons. Specifically, this enables loading/unloading of the waste plastic material to/from a vehicle in terms of the size and the weight and thus can reduce the cost associated with the transportation from the dismantling site to a material recycling facility; and the substantially plate-shaped member having such a size can be directly fed into a crushing machinery at the facility. The size of the plate-shaped member is set so as to be not less than 50 cm square for the following reason. Specifically, this enables pieces of the blade crushed at the dismantling site to be quickly discharged and thus prevents unnecessary extension of the construction period, thereby making it possible to reduce the dismantling cost. Thus, cutting the waste plastic material into a substantially plate-shaped member of a size in a range from 50 cm square to 1 m square at the dismantling site makes it possible to optimize the cost associated with dismantling and the cost associated with the transportation from the dismantling site to the material recycling facility.

This makes it possible to simultaneously solve, e.g., the problem associated with the weight of the wind turbine blade and the problem associated with the transportation from the wind power generation site to the facility, thereby facilitating establishment of a recycling system for a dismantled wind turbine blade. Namely, this easily enables, by a general transportation means, establishment of a recycling system for a waste plastic material which requires a special transportation means due to a factor such as the weight and/or the size. Note that the "general transportation means" refers to transportation by small transportation equipment such as a small or medium truck or a van.

In the crushing step S2, the waste plastic material in the shape of the substantially plate-shaped member of a size in a range from 50 cm square to 1 m square may be pulverized all at once into pulverized pieces of an average particle size of not less than 10 µm and not more than 50 µm, or may be pulverized gradually in a plurality of stages. The reason is as follows. Specifically, pulverizing, in a plurality of stages, the waste plastic material in the shape of a cut piece having a stable three-dimensional structure reduces a load applied to a crushing device, thereby reducing damage to the crushing device.

For example, the crushing step S2 includes a first crushing step S21 of pulverizing the substantially plate-shaped member into pulverized pieces of an average particle size of not less than 20 mm and not more than 60 mm and a second crushing step S22 of pulverizing the pulverized pieces obtained through the first crushing step S21 into pulverized pieces of an average particle size of not less than 10 mm and not more than 50 mm.

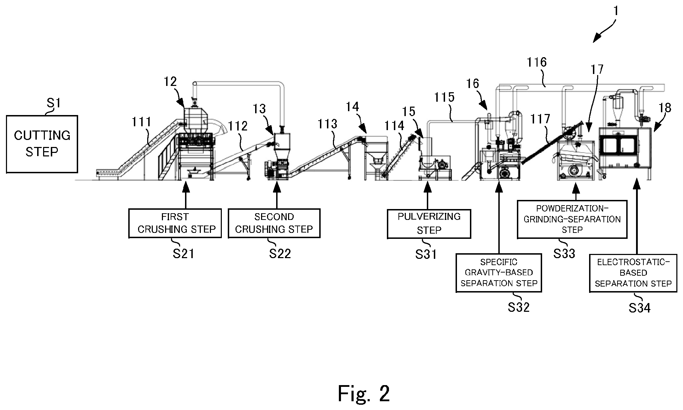

As shown in Fig. 2, the first crushing step S21 is a step of coarsely pulverizing the waste plastic material so that a large chunk of the waste plastic material is broken into small pieces, in order that the subsequent second crushing step S22 is performed efficiently. Examples of a coarse crusher 12 used in the first crushing step S21 include a cutter mill, a roller mill, a hammer mill, a jaw crusher, and a shredder. The cutter mill is configured to cut the waste plastic material by blades that are rotating. The roller mill is configured to press and crush the waste plastic material by a roller that is rotating. The hammer mill is configured to pulverize the waste plastic material by hammers that are rotating. The jaw crusher includes two plates. One of the two plates is a "fixed jaw", which is a fixed member, whereas the other of the two plates is a "movable jaw", which is a member vibrating on the opposite side. The movable jaw, which is configured to be moved by an eccentric shaft and a link mechanism, is caused to move up and down, thereby compressing and pulverizing a waste plastic material in cooperation with the fixed jaw. The shredder is a crushing device that includes a rotating drum or a disc provided with a series of blades or hammers and that shreds the waste plastic material by the blades or hammers that are rotating at high speed.

The second crushing step S22 is a step of finely pulverizing the waste plastic material so that the particles of the waste plastic material are made even smaller than the pulverized pieces obtained through the first crushing step S21. Through the fine pulverization, fibers, resins, and metals within the waste plastic material are dispersed into even finer particles. Examples of a fine crusher 13 used in the second crushing step S22 include a cutter mill, a ball mill, a converge mill, a rod mill, and a disc mill. The cutter mill has a similar configuration to that of the cutter mill for coarse pulverization. The ball mill includes a rotating cylinder filled with media such as balls and/or beads, and is configured to pulverize the waste plastic material by the media. The converge mill includes a rotating cylinder and a screw provided inside the cylinder, and is configured to pulverize the waste plastic material by the screw. The rod mill includes a cylindrical drum and steel rods arranged horizontally inside the drum. In the rod mill, the rods are raised by rotation of the drum and an impact and friction are applied to the waste plastic material when the rods drop by the gravity, whereby the waste plastic material is pulverized. The disc mill includes two discs arranged so as to face each other. In the disc mill, with respect to one fixed disc, the other disc is rotated. Consequently, the waste plastic material fed between the discs is pulverized.

The method for producing a recycled fiber-reinforced resin includes a powderization step S3, which is performed after the crushing step S2. The powderization step S3 is a step of powderizing the pulverized pieces obtained through the pulverization performed in the crushing step S2 and picking up a desirable component(s), e.g., separating a plastic and metal. Specifically, the powderization step S3 includes a pulverizing step S31, a specific gravity-based separation step S32, a powderization-grinding-separation step S33, and an electrostatic-based separation step S34.

The pulverizing step S31 is a step of ultra-finely pulverizing the waste plastic material so that the waste plastic material is pulverized into fine particles having an average particle size of not less than 10 µm and not more than 50 µm. Examples of the pulverizing device 13 used in the pulverizing step S31 include a ball mill, a bead mill, and a jet mill. Each of the ball mill and the bead mill includes a rotating cylinder filled with media such as balls and/or beads, and is configured to pulverize the waste plastic material by the media. The jet mill is configured to pulverize the waste plastic material by causing collision and grinding by a high-speed airflow (compressed air or vapor).

The specific gravity-based separation step S32 is a step of separating components in the waste plastic material based on differences in specific gravity of the components. For example, since the specific gravity varies depending on the type of plastic material or the type of metal, use of specific gravity-based separators 16 for the specific gravity-based separation step S32 makes it possible to separate plastic materials by their types and/or separate plastic materials from metal.

The powderization-grinding-separation step S33 is a step of further subjecting the pulverized pieces obtained through the ultra-fine pulverization performed in the pulverizing step S31 to cutting and friction application performed by powderization-grinding-separation devices 17 so that the pulverized pieces are ultra-finely pulverized, and separating the ultra-finely pulverized pieces from the other pulverized pieces. This step can improve the precision of the pulverization, and also can improve the precision of the separation between the fibers and the resin. Consequently, in a case where the ultra-finely pulverized fiber-reinforced resin is mixed with a plastic resin or a thermoplastic resin that is a virgin thermoplastic resin and a resultant mixture is heated and molded, improved miscibility with the thermoplastic resin is achieved, which makes it possible to improve physical properties of a molded product, particularly, strength and durability of the molded product. Furthermore, the uniform particle size and the uniform mixing improve fillability, uniformity in thermal conductivity, and flowability during heating and molding, thereby reducing shrinkage and distortion. Consequently, a molded product can achieve improved external appearance and improved precision in size.

The electrostatic-based separation step S34 is a step of performing separation based on the differences in the electric properties that vary depending on the type of waste plastic material and metal. For example, since the electric property varies depending on the type of plastic material or the type of the metal, performing the electrostatic-based separation step S34 makes it possible to separate plastic materials by their types and/or to separate plastic materials from metal.

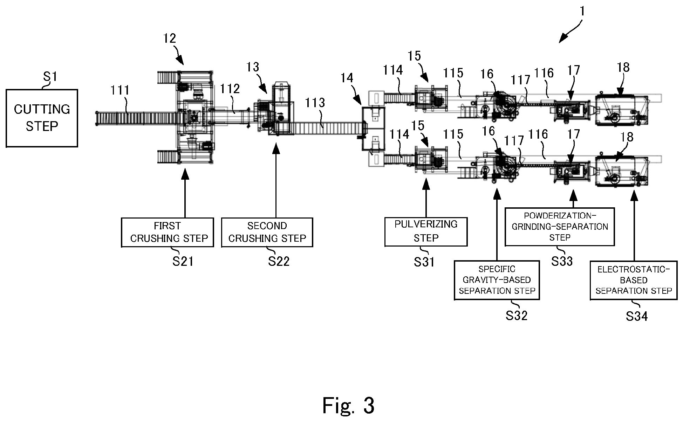

As shown in Fig. 3, the crushing step S31 may be parallelized to improve the processing capacity. In this case, in a case where the processing time required for the fine pulverization in the second crushing step S22 is shorter than that required for the ultra-fine pulverization in the pulverizing step S31, the finely pulverized pieces can be continuously given to two or more pulverizing steps S31 having been parallelized to increase the processing capacity, even without the need for the finely pulverized pieces to be temporarily stored at another place as work-in-process. Further, the second crushing step S22 and the pulverizing step S31 may be parallelized. In this case, in a case where the processing time required for the coarse pulverization in the first crushing step S21 is shorter than those required for the fine pulverization in the second crushing step S22 and the ultra-fine pulverization in the pulverizing step S31, the coarsely pulverized pieces can be continuously given to the second crushing step S22 and the pulverizing step S31 having been parallelized, even without the need for the coarsely pulverized pieces to be temporarily stored at another place as work-in-process.

### (Method for producing recycled resin composition)

As shown in Fig. 1, a kneading step S4, which is a step of producing a recycled resin composition, is provided after the process (S1, S2, S3) for producing a recycled fiber-reinforced resin. The kneading step S4 is a step of kneading, by using an extruder, a kneading subject containing not less than 20 mass% and not more than 30 mass% of the recycled fiber-reinforced resin obtained by the cutting step S1 and the crushing step S2 and not less than 65 mass% and not more than 78 mass% of a plastic resin. The recycled fiber-reinforced resin has a drawback of being too hard to be recycled easily. However, the kneading step S4 mixes the recycled fiber-reinforced resin with the plastic resin so as to be turned into a recycled resin composition, which can be uniformly kneaded by the extruder. This makes it possible to solve the problem that FRP is too hard to recycle.

The "plastic resin" refers to a thermoplastic resin that has been collected from a used plastic and that has a property of being softened upon heated and being solidified upon cooled. Specifically, examples of general-purpose plastics include polyethylene (PE), polypropylene (PP), polystyrene (PS), polyvinyl chloride (PVC), polyamide (PA), and polycarbonate (PC). Further, examples of engineering plastics include polyamide (PA), polyester (PET), polycarbonate (PC), polyphenylene ether (PPE), polyvinylidene fluoride (PVDF), and polytetrafluoroethylene (PTFE).

The plastic resin can be any of used plastics contained in containers and packaging, building materials, fibers, toys, and automobile components. It is preferable that the plastic resin contain a resin covering a waste electric wire having been used in at least one selected from the group consisting of wind power plants, bathrooms, and a ship interior. In this case, the recycled resin composition, which is a mixture of the recycled fiber-reinforced resin and the plastic resin, is derived from at least one selected from the group consisting of wind turbine blades, bathtubs, and hulls. Therefore, such a recycled resin composition contains at least one type of impurity component selected from the group consisting of wood components, anticorrosive coating components, urethane components, and rubber components. Thus, the recycled resin composition functions as a filler for the plastic resin. Therefore, unlike a case where the recycled fiber-reinforced resin is reused as a filler for cement, the presence of a small amount of the impurity component would not adversely affect the recycled resin composition.

In addition, since the recycled resin composition has high strength, it is possible to enhance the strength of a recycled resin molded body. That is, mixing of the recycled resin composition can achieve an additional value. Furthermore, in a case where the waste plastic material is derived from a wind turbine, the recycled fiber-reinforced resin contains a wood component. A filler containing a wood component has an advantage of making it possible to reduce an amount of the plastic resin to be used. Therefore, the wood component, which is originally an impurity, can be regarded as an advantage. Similarly, a recycled fiber-reinforced resin containing a urethane component or a rubber component also has an advantage of making it possible to reduce an amount of the plastic resin to be used.

Moreover, the kneading subject in the kneading step S4 may contain the recycled fiber-reinforced resin, the plastic resin, and a virgin thermoplastic resin. The "virgin thermoplastic resin" herein refers to a thermoplastic resin produced from a new raw material, rather than the one obtained from recycling. The virgin thermoplastic resin has higher purity compared to the plastic resin, and does not contain other materials or impurities. Thus, the virgin thermoplastic resin has constant quality. The virgin thermoplastic resin also has clear physical and chemical properties, and thus performance thereof can easily be estimated. Further, the virgin thermoplastic resin exhibits a stable behavior and is easy to process during the production process. Consequently, in a case where the virgin thermoplastic resin is mixed with the recycled fiber-reinforced resin and the plastic resin, this can further enhance the thermoplastic property. This facilitates uniform kneading using the extruder, which can solve the problem that FRP being too hard to be recycled easily.

Similarly to the plastic resin, the virgin thermoplastic resin is a type of resin that has a property of being softened upon heated and being solidified upon cooled. Specific examples of general-purpose plastics include polyethylene (PE), polypropylene (PP), polystyrene (PS), polyvinyl chloride (PVC), polyamide (PA), and polycarbonate (PC). Further, examples of engineering plastics include polyamide (PA), polyester (PET), polycarbonate (PC), polyphenylene ether (PPE), polyvinylidene fluoride (PVDF), and polytetrafluoroethylene (PTFE).

### (Method for producing recycled resin molded body)

A molding step S5 of molding a recycled resin composition is provided after the kneading step S4 of producing the recycled resin composition. The molding step S5 heats the mixed recycled resin composition to a temperature at which the plastic resin is softened, and then feeds the heated recycled resin composition into a molding machine so that the heated recycled resin composition is formed into a desired shape by press molding, injection molding, extrusion molding, or the like. Thereafter, the molding step S5 cools the molded product to cure the plastic resin so as to maintain its shape. Subsequently, post-processing such as trimming, grinding, and painting is performed as needed to yield a final molded part.

### (Production system 1 for recycled fiber-reinforced resin)

As shown in Figs. 2 and 3, the crushing step S2 and the separation step S3 are provided in the production system 1 for the recycled fiber-reinforced resin and the resin composition. The production system 1 includes: a first conveyor 111 which is used in the cutting step S1 and onto which cut pieces of the waste plastic material transported from the dismantling site of the waste plastic material are placed; and the coarse crusher 12 which is used in the first crushing step S21 and which is connected to a feed-out end of the first conveyor 111. The coarse crusher 12 has a shredding mechanism and is configured so that the cut pieces of the waste plastic material, each of which is a large chunk having a size of approximately 50 cm square to 100 cm square, are crushed into smaller pieces having a size of approximately 20 mm square to 40 mm square.

A feed-in end of a second conveyor 112 is disposed below the coarse crusher 12 in such a manner that the feed-in end receives the cut pieces obtained through the crushing. The second conveyor 112 has a feed-out end connected with a fine crusher 13 used in the second crushing step S22. The fine crusher 13 has a cutter mill mechanism, and is configured to make the waste plastic material into crushed pieces having a size of approximately 10 mm square to 30 mm square, which are even smaller than the crushed pieces obtained through the first crushing step S21. A feed-in end of a third conveyor 113 is disposed below the fine crusher 13 in such a manner that the feed-in end receives the cut pieces obtained through the crushing. A feed-out end of the third conveyor 113 is connected with a cache silo 14. The cache silo 14 is configured to temporarily store the crushed pieces conveyed from the fine crusher 13 and to discharge the stored crushed pieces through two discharge ports provided at two opposite ends, in a width direction, of the production line.

The discharge ports of the cache silo 14 are respectively connected with feed-in parts of a pair of bucket conveyors 114. Discharge ends of the bucket conveyors 114 are respectively connected with pulverizers 15 used in the pulverizing step S31. The pulverizers 15 are each configured to pulverize the crushed pieces having a size of approximately 10 mm square to 30 mm square into pulverized pieces having a size of approximately 30 µm to 50 µm. The pulverizers 15 are respectively connected, via first pneumatic conveyors 115, with the specific gravity-based separators 16 used in the specific gravity-based separation step S32, where resin and metal are separated. The specific gravity-based separators 16 are respectively connected with the powderization-grinding-separation devices 17 used in the powderization-grinding-separation step S33. The powderization-grinding-separation devices 17 are each configured to pulverize the pulverized pieces into pulverized pieces having a size of approximately 20 µm to 30 µm and to perform separation thereof. The powderization-grinding-separation devices 17 are respectively connected, via screw conveyors 117, electrostatic-based separators 18 used in the electrostatic-based separation step S34. The electrostatic-based separators 18 are each configured to electrically charge the separated pulverized pieces, apply an electric field to the electrically-charged subjects, and isolate pulverized pieces having different electric charges.

The specific gravity-based separators 16, the powderization-grinding-separation devices 17, and the electrostatic-based separators 18 are connected with exhaust ducts 116. The exhaust ducts 116 are connected with a dust collector (not illustrated) so that fine dust scattered during crushing and separation are fed to the dust collector.

Next, the following will describe details of major devices used in the production system 1.

### (Cutting step S1: cutting device 2)

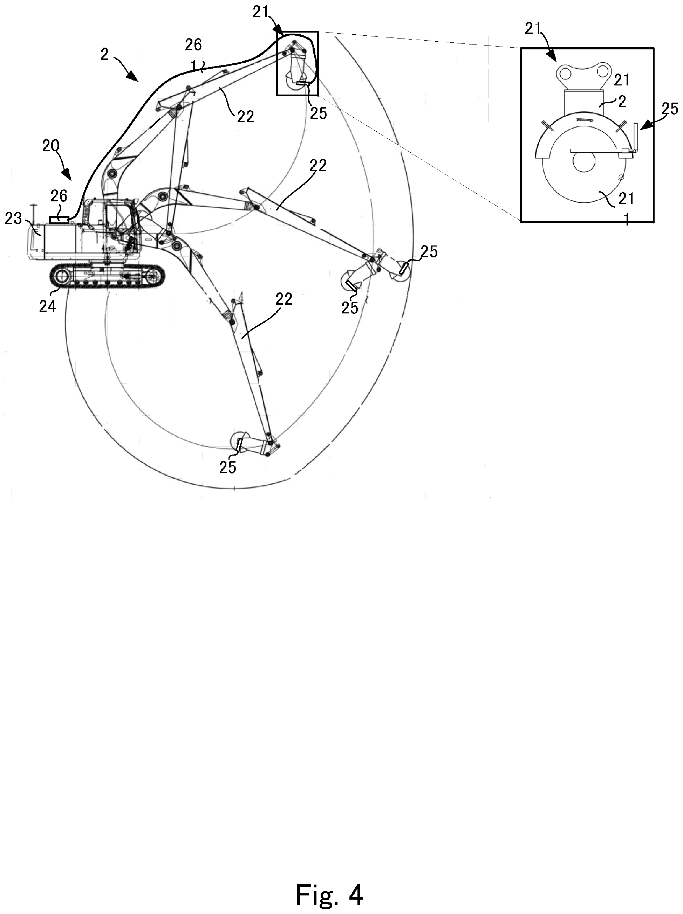

As shown in Fig. 4, a cutting device 2 includes: a hydraulic shovel 20 which includes a shovel body 23 moved by a traveling crawler 24 and an arm 22 provided to the shovel body 23; a cutting mechanism 21 which is detachably provided at a tip end of the arm 22 and which cuts the waste plastic material into pieces of a predetermined size; water spray mechanisms 25 each of which sprays water onto the cutting mechanism 21; and a water supply mechanism 26 which is provided to the shovel body 23 and which supplies water to the water spray mechanisms 25. The cutting mechanism 21 includes: a plurality of cutting blades 211 which are disposed so as to be spaced from each other at a predetermined widthwise interval and which cut the waste plastic material; and a driving mechanism 212 which hydraulically rotates the cutting blades 211.

According to the above configuration, hydraulic power is used as driving force for the cutting mechanism 21, which enables stable cutting of rigid FRP. Further, water is sprayed onto the cutting part, which can prevent scattering of dust generated during cutting.

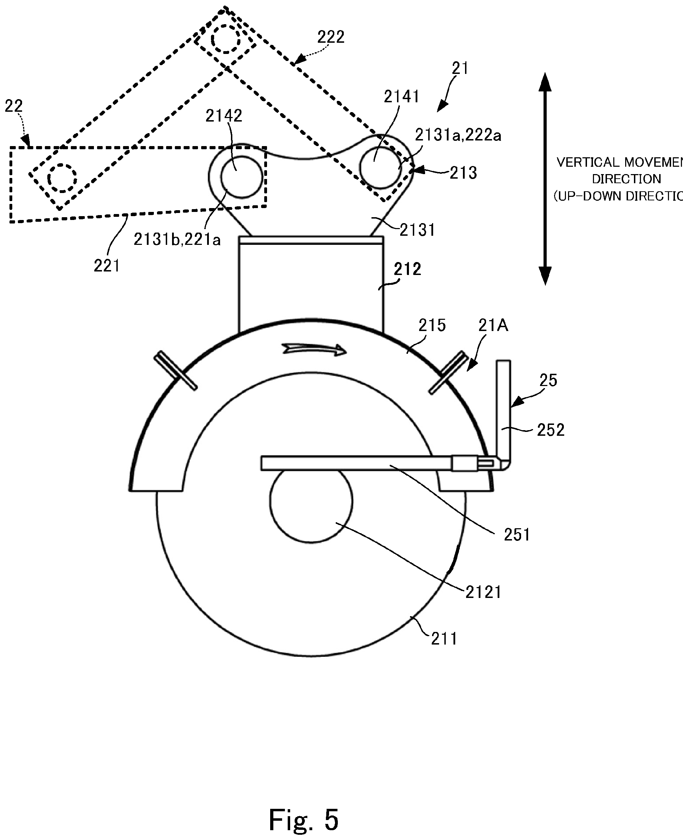

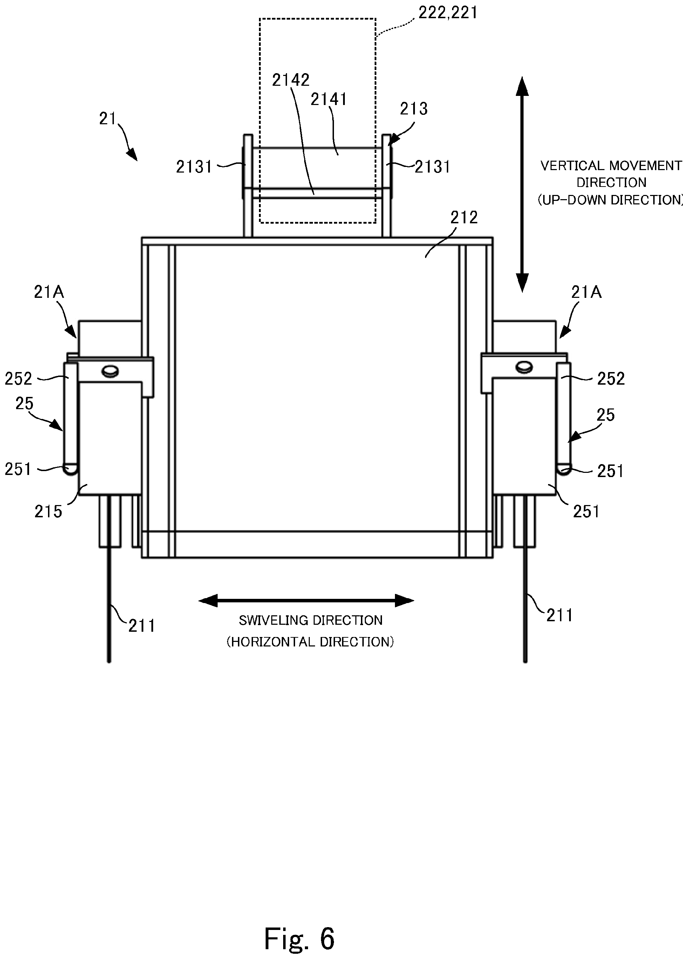

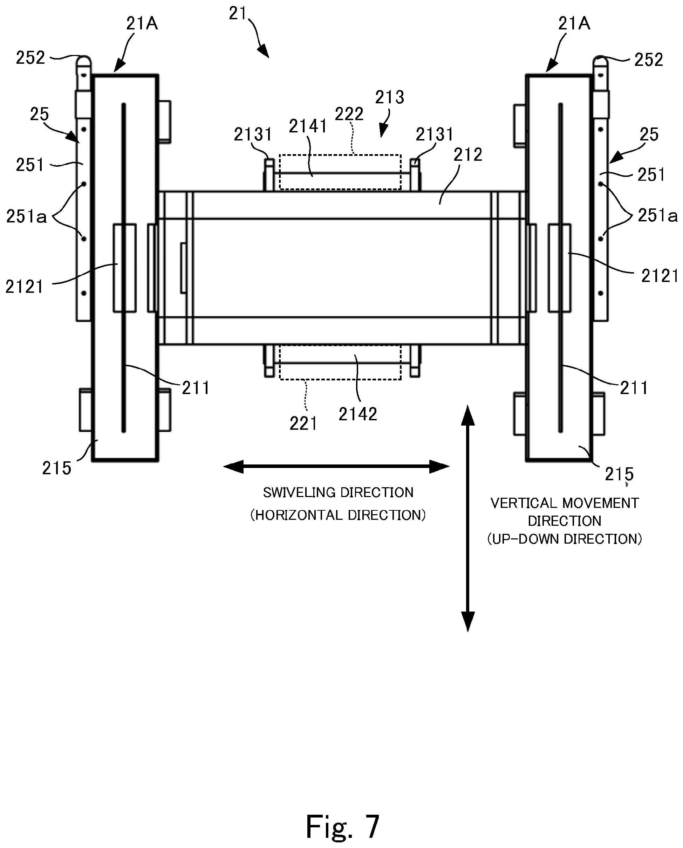

Next, the following will describe details of the cutting mechanism 21 with reference to Figs. 5 to 7. Fig. 5 is a right side view of the cutting mechanism 21. Fig. 6 is a front view of the cutting mechanism 21. Fig. 7 is a bottom view of the cutting mechanism 21.

As also shown in Figs. 5 and 6, the cutting mechanism 21 includes an attachment mechanism 213 attached to an arm tip end 221, which is a tip end of the arm 22. The attachment mechanism 213 includes a pair of attachment plates 2131 provided so as to be linearly symmetric in a swiveling direction centered on a vertical movement direction of the arm tip end 221. A distance between the attachment plates 2131 is set so as to be equal to a dimension for inserting the tip end of the arm 22 between the attachment plates 2131. Note that the arm tip end 221 is provided with a link mechanism 222. The link mechanism 222 has a function of rotating cutting blade mechanisms 21A of the cutting mechanism 21 in the vertical movement direction relative to the arm tip end 221.

Each attachment plate 2131 has an upper end which faces the arm tip end 221 and which is curved in a concave shape, thereby avoiding a phenomenon that the arm tip end obstructs the cutting blade mechanisms 21A rotating in the vertical movement direction relative to the arm tip end. The upper end of each attachment plate 2131 has two opposite ends respectively provided with through-holes 2131a and 2131b. Through the through-holes 2131a and 2131b, pin members 2141 and 2142 are respectively inserted. One pin member 2141 is rotatably inserted into a through-hole 222a provided in a driven end of the link mechanism 222. The other pin member 2142 is rotatably inserted into a through-hole 221a provided in an arm tip end 221. Consequently, when the driven end of the link mechanism 222 moves, the cutting blade mechanisms 21A are caused to rotate and vertically move around the pin member 2142 of the arm tip end 221 relative to the arm tip end 221.

As also shown in Fig. 7, the driving mechanism 212, which hydraulically rotates the cutting blades 211, is provided below the attachment mechanism 213. The driving mechanism 212 is constituted by a hydraulic motor which generates rotational motion by using a hydraulic fluid having been pressurized by a hydraulic pump. The driving mechanism 212 supplies the pressurized hydraulic fluid into a chamber so that the resulting pressure rotates a rotational shaft 2121. Thus, controlling a flow rate and a pressure of the hydraulic fluid can freely adjust the rotational speed and the torque.

Note that, in the driving mechanism 212, it is preferable that the flow rate and the pressure of the hydraulic fluid be controlled so as to enable cutting at a constant rotational speed. This enables stable cutting even when the type or size of a cutting subject varies. Specifically, a speed sensor such as an encoder or a tachogenerator is attached to the rotational shaft 2121 in order to detect and stabilize the rotational speed of the rotational shaft 2121, and measurement data indicative of the measured rotational speed is fed back to the control system. In the control system, based on the speed data from the speed sensor, the flow rate and the pressure of the hydraulic fluid fed from the hydraulic pump are input into a PID controller. Then, based on a difference (deviation) between the target rotational speed and the actual rotational speed, the PID controller adjusts the input to the hydraulic motor, thereby controlling the rotational speed of the rotational shaft 2121 by using the flow rate and the pressure of the hydraulic fluid.

Examples of the driving mechanism 212 include: a gear motor which generates rotational motion by using an internal or external gear; a vane motor in which a plurality of vanes housed in slots within a cylinder move radially by hydraulic pressure to generate rotation; and a piston motor which hydraulically moves a plurality of pistons arranged around a shaft to generate rotational motion.

The cutting blade mechanisms 21A, to each of which rotational driving force from the driving mechanism 212 is transmitted, are respectively provided at two opposite ends, in a swiveling direction (horizontal direction), of the arm tip end 221 in the driving mechanism 212. Each cutting blade mechanism 21A includes: the cutting blade 211 having a rotational center connected with the rotational shaft 2121 of the driving mechanism 212; and a cover member 215 which is positioned upward of the rotational center of the cutting blade 211 and which covers a peripheral edge of the cutting blade 211. The cover member 215 prevents dust from scattering while the waste plastic material is being cut by the cutting blades 211, and also prevents a fragment(s) from scattering in case of breakage of the cutting blade(s) 211. A distance between the cutting blades 211 is set so as to equal to a cutting interval of the waste plastic material. With this, by repeating swiveling movement of the arm tip end 221 and cutting operation of the cutting blade mechanisms 21A, it is possible to cut the waste plastic material at 80 cm intervals, for example.

An amount of the swiveling movement of the arm tip end 221 may be determined by an operator's visual observation of two marks spaced from each other by a predetermined interval (e.g., 80 cm), the two marks having been given to the waste plastic material by irradiation with laser pointers provided to the arm tip end 221. Alternatively, the amount of the swiveling movement of the arm tip end 221 may be automatically determined based on a distance of the arm tip end 221 and a swiveling angle of the arm 22.

The cutting blade mechanisms 21A are respectively provided with the water spray mechanisms 25. Each water spray mechanism 25 includes a nozzle member 251 and a hose connecting member 252 provided at a base end of the nozzle member 251. The hose connecting member 252 is connected with the water supply mechanism 26 via a water supply piping 261 (shown in Fig. 4), and is configured to be supplied with water from the water supply mechanism 26. The nozzle member 251 is horizontally disposed at an upper location within an area ranging from the rotational center part of the cutting blade 211 to the cover member 215. A base part (one end) of the nozzle member 251 is connected with the cover member 215. A free end (the other end) of the nozzle member 251 is located closer to the other end over the rotational center of the rotational shaft 2121. A plurality of water spray ports 251a are provided on a side surface of the nozzle member 251. The water spray ports 251a are arranged at equal intervals along a longitudinal direction of the nozzle member 251. The water spray ports 251a spray water to prevent scattering of dust generated during cutting of the waste plastic material.

Note that the water spray ports 251a may be configured to spray water along the side surface of the cutting blade 211 or may be configured to spray water toward the peripheral edge of the cutting blade 211. The water spray ports 251a may be provided with a nozzle member(s). Examples of the nozzle member include: a flat spray nozzle that creates a uniform water curtain along the side surface of the cutting blade and is effective for cooling and removing of cutting debris generated during cutting; a jet nozzle that concentrates a high-pressure water flow onto a certain part of the cutting blade 211 to enhance cooling effect and assist in washing away cutting debris; a fog nozzle that sprays fine mist water to cool a wide area of the cutting blade 211 to suppress scattering of dust; and a shower nozzle that is made of a plurality of small water spray ports integrated together and that uniformly cools a wide area of the cutting blade 211.

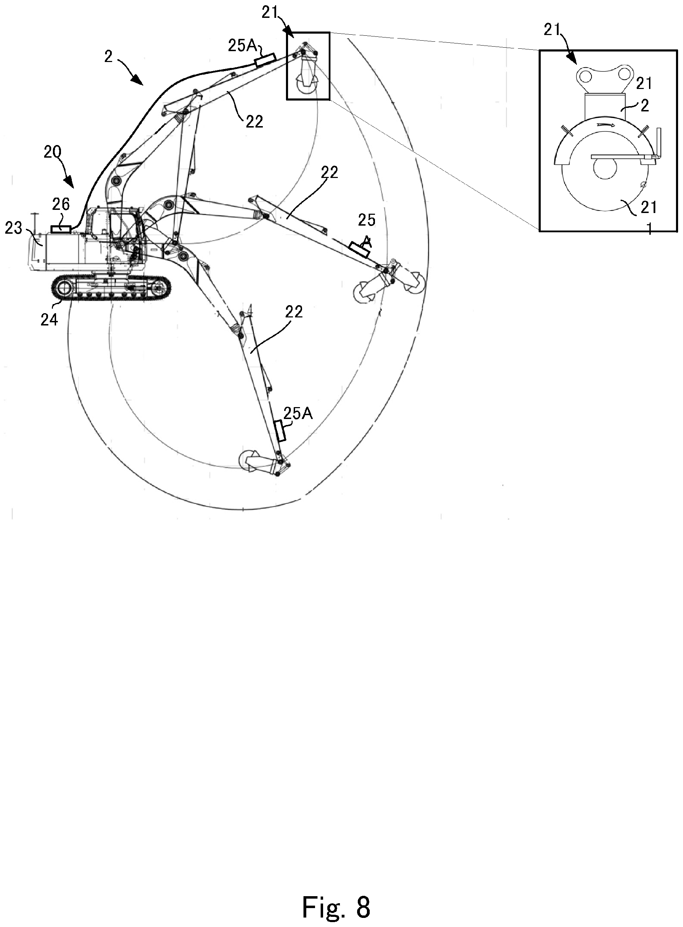

As shown in Fig. 8, the cutting device 2 may include a water spray mechanism 25A provided at an intermedium part of the arm 22. Specifically, the cutting device 2 includes: a hydraulic shovel 20 which includes a shovel body 23 moved by a traveling crawler 24 and an arm 22 provided to the shovel body 23; a cutting mechanism 21 which is detachably provided at a tip end of the arm 22 and which cuts the waste plastic material into pieces of a predetermined size; a water spray mechanism 25A which is provided at the intermedium part of the arm 22 and which sprays water onto the cutting mechanism; and a water supply mechanism 26 which is provided to the shovel body 23 and which supplies water to the cutting mechanism 21 and the water spray mechanism 25A. According to the above configuration, while water is used as driving force for the cutting mechanism 21, water is sprayed over the entire cutting part during cutting of the waster plastic, which can prevent scattering of dust generated during the cutting. The cutting device 2 may include both the water spray mechanism 25A provided at the intermediate part of the arm 22 and water spray mechanisms 25 provided to the respective cutting blade mechanisms 21A. This configuration can prevent both dust scattering for an entire area and dust scattering for a localized area, thereby making it possible to further improve the working environment.

### (First crushing step S21: rough crusher 12)

The coarse crusher 12 has a shredder structure. Specifically, the coarse crusher 12 includes a pair of rotating drums each of which has a series of blades provided around its periphery. Further, the rotating drums are arranged so as to be in parallel with each other and overlap each other such that side surfaces of the blades of these drums face each other. Moreover, the rotating drums are configured to be rotated by a driving mechanism so that the blades in the overlapping part move from up to down. Thus, when a cut piece carried by the first conveyor 111 is fed into the coarse crusher 12, the cut piece is drawn into the overlapping part along with the rotation of the rotating drums, and are pulverized into finer cut pieces by cutting force of the blades. Then, the cut pieces obtained through the pulverization fall from the overlapping part where the rotating drums overlap each other.

### (Powderization-grinding-separation step S33: powderization-grinding-separation device 17)

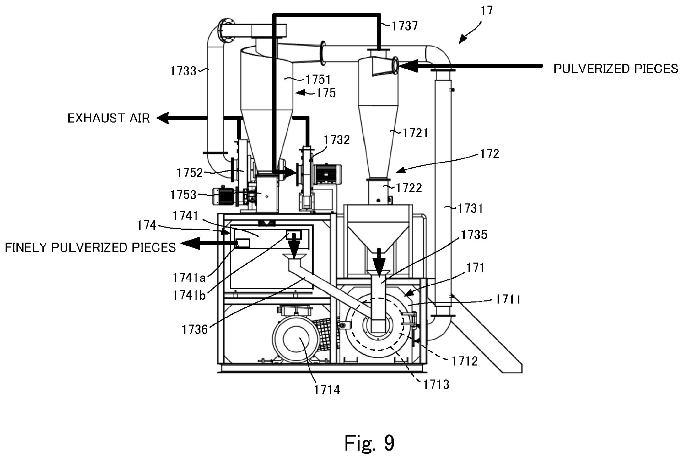

As shown in Fig. 9, each powderization-grinding-separation device 17 has a function of further ultra-finely pulverizing, through cutting and grinding, the pulverized pieces obtained through the pulverization performed in the pulverizing step S31 as well as a pulverization circulation function of ultra-finely pulverizing again pulverized pieces having not been ultra-finely pulverized.

To be more specific, each powderization-grinding-separation device 17 includes: a pulverizing mechanism 171 which pulverizes the pulverized pieces (raw material) obtained through the pulverization performed by the pulverizer 15 in the pulverizing step S31 (Fig. 3); and a feeder mechanism 172 which feeds, by equal amounts, the raw material to the pulverizing mechanism 171. The feeder mechanism 172 includes: a raw material tank 1721 in which a raw material having not been subjected to pulverization by the pulverizing mechanism 171 yet is stored; an exhaust fan 1732 which exhausts air from the raw material tank 1721; and a feeding device 1722 which feeds the pulverized pieces (raw material) stored in the raw material tank 1721 at a constant rate. The raw material tank 1721 has an upper part having a cylindrical shape and a lower part having an inverted conical shape, and also has an upper surface having a center connected with the exhaust fan 1732 via the exhaust pipe 1737. This allows the exhaust fan 1732 to exhaust air from the raw material tank 1721, so as to create a vacuum inside the raw material tank 1721. This generates a flow of the powdered pulverized pieces, so that the powdered pulverized pieces are drawn into the raw material tank 1721. Note that the feeder mechanism 172 has a cyclone collector function of the later-described cyclone collector mechanism 175.

The pulverizing mechanism 171 is disposed below the feeder mechanism 172. A discharge port of the feeder mechanism 172 and an inflow port of the pulverizing mechanism 171 communicate via a feeding pipe 1735. The pulverizing mechanism 171 has a function of further pulverizing the pulverized pieces (raw material) supplied from the feeder mechanism 172 to yield ultra-finely pulverized pieces. The pulverizing mechanism 171 will be described in detail later. A discharge port of the pulverizing mechanism 171 is connected with the cyclone collector mechanism 175 via a feeding pipe 1731. The cyclone collector mechanism 175 includes: a cyclone body 1751; an exhaust fan 1752 connected to a center of an upper surface of the cyclone body 1751 via an exhaust pipe 1733; and a feeding device 1753 which feeds the pulverized pieces stored in the cyclone body 1751 to a separation device 174 at a constant rate.

With this, in the cyclone collector mechanism 175, a mixture flow of the pulverized pieces including the ultra-finely pulverized pieces discharged from the pulverizing mechanism 171 and air is circumferentially blown into the cyclone body 1751 at high speed, so that the mixture flow circulates within the cyclone body 1751. Then, the powdered pulverized pieces including the ultra-finely pulverized pieces are pressed against an outer wall by centrifugal force, so as to fall into a lower part along the wall surface. Meanwhile, the air is discharged from the center of the upper surface of the cyclone body 1751, without being subjected to centrifugal force. The powder having fallen into the lower part of the cyclone body 1751 passes through a discharge port provided at a lower end of the cyclone body 1751, so as to be fed to the separation device 174, which is disposed below the cyclone body 1751.

The separation device 174 has a function of separating the pulverized pieces into the ultra-finely pulverized pieces and matters other than the ultra-finely pulverized pieces. Specifically, the separation device 174 includes: a separation device body 1741 provided with a screen mesh; and a vibration mechanism (not shown) which vibrates the separation device body 1741. The separation device body 1741 includes: a first discharge port 1741a through which the ultra-finely pulverized pieces thus separated are discharged; and a second discharge port 1741b through which powder other than the ultra-finely pulverized pieces is discharged. Thus, when the separation device body 1741 is vibrated by the vibration mechanism, the ultra-finely pulverized pieces smaller than a mesh size of the screen mesh pass through the screen mesh and fall into a lower part, whereas pulverized pieces other than them remain on the screen mesh. The ultra-finely pulverized pieces having fallen through the screen mesh are discharged through the first outlet 1741a. Meanwhile, the large-particle-size pulverized pieces other than the ultra-finely pulverized pieces remaining on the screen mesh are discharged through the second outlet 1741b. The second discharge port 1741b is connected with the pulverizing mechanism 171 via a feeding pipe 1736, through which the pulverized pieces other than the ultra-finely pulverized pieces are returned to the pulverizing mechanism 171 so as to be pulverized again.

As discussed above, each powderization-grinding-separation device 17 includes: the pulverizing mechanism 171 which further ultra-finely pulverizes the pulverized pieces through cutting and grinding; the separation device 174 which separates the pulverized pieces including the ultra-finely pulverized pieces obtained through the ultra-fine pulverization performed by the pulverizing mechanism 171 into ultra-finely pulverized pieces and pulverized pieces other than the ultra-finely pulverized pieces, i.e., pulverized pieces larger in particle size than the ultra-finely pulverized pieces; and the pulverization circulation path (feeding pipe 1736) through which the pulverized pieces other than the ultra-finely pulverized pieces, separated by the separation device 174, are returned to the pulverizing mechanism 171 so as to be ultra-finely pulverized again.

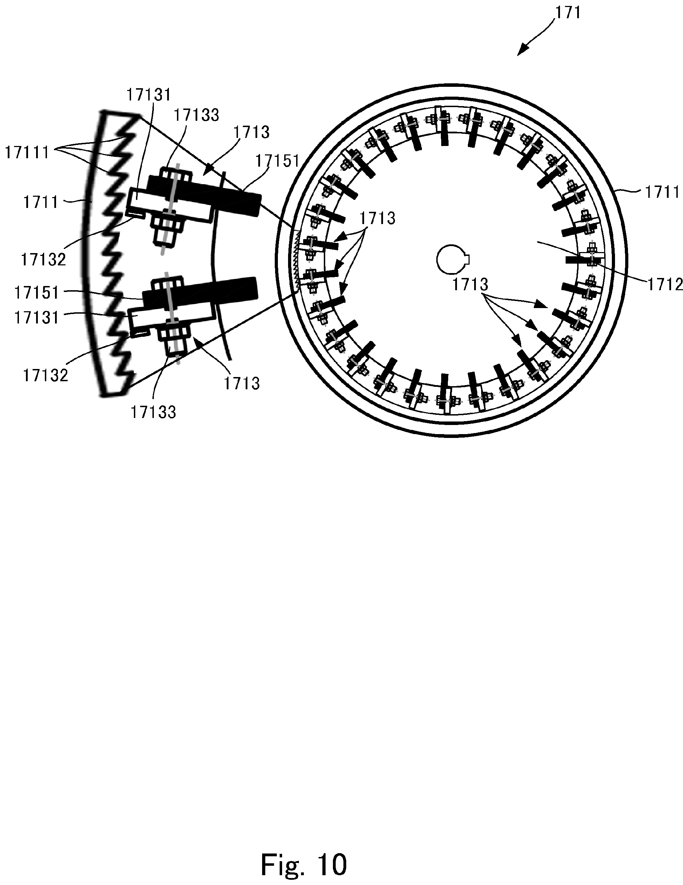

As also shown in Fig. 10, the pulverizing mechanism 171 includes: a housing 1711; a rotating body 1712 which has a cylindrical shape, which is rotatably housed in the housing 1711, and which has a rotational shaft located at its center axis; and a plurality of cutting and grinding blades 1713 provided at equal intervals on an outer peripheral surface of the rotating body 1712. Each cutting and grinding blade 1713 includes: a blade member which cuts the raw material such as the pulverized pieces; and a grinding member which is provided on a side surface of the blade member and which grinds the raw material. The pulverizing mechanism 171 further includes a rotational driving mechanism 1714 which is connected with the rotational shaft of the rotating body 1712 and which rotates the rotating body 1712 at high speed.

Each powderization-grinding-separation device 17 configured as above includes: the pulverizing mechanism 171 which pulverizes the raw material obtained through the powderization performed by the pulverizer 15 in the pulverizing step S31 (Fig. 3); the feeder mechanism 172 which feeds, by equal amounts, the raw material to the pulverizing mechanism 171; and the cyclone collector mechanism 175 which collects, by an air stream, a powdered material (ultra-finely pulverized pieces, pulverized pieces) obtained through the pulverization of the raw material performed by the pulverizing mechanism 171. The pulverizing mechanism 171 includes: the housing 1711; the rotating body 1712 which has a cylindrical shape, which is rotatably housed in the housing 1711, and which has the rotational shaft located at its center axis; the plurality of cutting and grinding blades 1713 which are provided at equal intervals on the outer peripheral surface of the rotating body 1712 and each of which includes the blade member for cutting the raw material and the grinding part, provided on the side surface of the blade member, for grinding the raw material; and the rotational driving mechanism 1714 which is connected with the rotational shaft of the rotating body 1712 and which rotates the rotating body 1712 at high speed.

The above configuration pulverizes the pulverized raw material through both cutting and grinding, and therefore can pulverize powders having different particle sizes and different degrees of hardness (e.g., FPR and adhesives) into particles of a uniform particle size.

### (Recycled fiber-reinforced resin)

The recycled fiber-reinforced resin produced in the above-described manner is made of pulverized pieces of a waste plastic material which contains: a fiber-reinforced resin; and at least one type of impurity component selected from the group consisting of wood components, anticorrosive coating components, urethane components, and rubber components, and has an average particle size of not less than 10 µm and not more than 50 µm.

The recycled fiber-reinforced resin configured as above has an average particle size as fine as not less than 10 µm and not more than 50 µm, and thus improves the moldability at the time of processing. In particular, the flowability of the waste plastic material is improved in a process such as injection molding or extrusion molding. This enhances dimensional accuracy and appearance quality of a product.

For example, wood fibers contained as a wood component function as a natural reinforcing material and reduce the thermal conductivity, thereby making it possible to enhance thermal insulation. Furthermore, addition of a wood component enables a molded product to have a natural appearance and texture. Note that a metal component is separated by the electrostatic-based separator, since the metal component can cause degradation of physical properties, such as making synthetic resins brittle.

A recycled fiber-reinforced resin containing an anticorrosive coating component exhibits enhanced corrosion resistance and is suitable for applications involving exposure to very severe environment or a chemical substance. A recycled fiber-reinforced resin containing a urethane component is suitable for applications for products requiring impact-resistant and/or comfortable grip feel, since the urethane component is excellent in shock absorption and durability. A recycled fiber-reinforced resin containing a rubber component can be effectively used as a vibration absorption material and/or a soundproofing material, since the rubber has excellent flexibility and excellent elasticity.

### (Recycled resin composition)

The recycled resin composition produced in the above-described manner at least contains not less than 20 mass% and not more than 30 mass% of the recycled fiber-reinforced resin and not less than 65 mass% and not more than 78 mass% of the plastic resin. Examples of the "plastic resin" herein include crosslinked polyethylene (XLPE), polyethylene (PE), polypropylene (PP), polybutylene terephthalate (PBT), and polyphenylene sulfide (PPS). Note that an electric wire removed during replacement of a wind power generation system can be used as a power distribution wire.

The recycled resin composition configured as above can enhance the efficiency in the molding process and a degree of freedom in product shape and design, since the plastic resin has a property of increasing its fluidity and moldability upon heating. Furthermore, the recycled resin composition can enhance strength and toughness by appropriately adjusting a blend ratio of the recycled fiber-reinforced resin and the plastic resin. Moreover, durability can be improved by appropriately selecting the type of plastic resin.

### (Recycled resin molded body)

A recycled resin molded body containing a recycled resin composition can be applied to various uses, since such a recycled resin composition is lightweight and has high strength and a low environmental impact. Specifically, the recycled resin molded body can be applied to: construction materials such as bricks, building boards, plywood, roofing materials, window frames, doors, flooring materials, and wall materials; mechanical parts such as automobile components, home appliance parts, and industrial machinery components; electrical and electronic components such as electric wires/cables and housings for electronic components; and daily necessities such as containers, bags, shoes, furniture, toys, and sporting goods. More specifically, the recycled resin molded body can be applied to base mats for solar power generation systems.

The above description has explained embodiments of the present invention. However, the present invention is not limited to the foregoing embodiments. Furthermore, the effects described in the foregoing embodiments are merely a list of most preferred effects given by the present invention, and the effects of the present invention are not limited to those described in the foregoing embodiments. Moreover, the foregoing embodiments have been described in details for the purpose of clearly explaining the present invention, and are not necessarily limited to those including all the described configurations.

### Reference Signs List

1: production system
2: cutting device
12: coarse pulverizer
13: fine pulverizer
14: cache silo
15: pulverizer
16: specific gravity-based separator
17: powderization-grinding-separation device
18: electrostatic-based separator

## Claims

1. A method for producing a recycled fiber-reinforced resin, the method comprising:
a cutting step of cutting, at a waste plastic material dismantling site, a waste plastic material into a substantially plate-shaped member of a size in a range from 50 cm square to 1 m square, the waste plastic material being derived from at least one selected from the group consisting of wind turbine blades, bathtubs, and hulls, and the waste plastic material containing a fiber-reinforced resin; and
a crushing step of transporting the substantially plate-shaped member to a production facility of a resin and pulverizing the substantially plate-shaped member at the production facility,
the crushing step pulverizing the substantially plate-shaped member in a plurality of stages into pulverized pieces of a final average particle size of not less than 10 µm and not more than 50 µm.

2. The method according to claim 1, wherein:
the crushing step includes
a first crushing step of pulverizing the substantially plate-shaped member into pulverized pieces of an average particle size of not less than 20 mm and not more than 60 mm,
a second crushing step of pulverizing the pulverized pieces obtained through the first crushing step into pulverized pieces of an average particle size of not less than 10 mm and not more than 50 mm, and
a pulverizing step of pulverizing the pulverized pieces obtained through the second crushing step into pulverized pieces of an average particle size of not less than 10 µm and not more than 50 µm.

3. A method for producing a recycled resin composition, the method comprising:
a kneading and molding step of kneading a kneading subject and thereafter feeding the kneading subject to an extruder or a compressor, the kneading subject at least containing not less than 20 mass% and not more than 30 mass% of a recycled fiber-reinforced resin obtained by the method recited in claim 1 and not less than 65 mass% and not more than 78 mass% of a plastic resin.

4. The method according to claim 3, wherein:
the kneading subject contains a virgin thermoplastic resin produced from a raw material.

5. The method according to claim 3, wherein:
the plastic resin contains a resin having been used in at least one selected from the group consisting of wind power plants, bathrooms, and a ship interior.

6. A method for producing a resin molded body comprising:
a molding step of molding the recycled resin composition obtained by the method recited in claim 3.

7. A cutting device comprising:
a hydraulic shovel which includes
a shovel body moved by a traveling crawler and
an arm provided to the shovel body;
a cutting mechanism which is detachably provided at a tip end of the arm and which cuts a waste plastic material into pieces of a predetermined size;
a water spray mechanism which sprays water onto the cutting mechanism; and
a water supply mechanism which is provided to the shovel body and which supplies water to the cutting mechanism and the water spray mechanism,
the cutting mechanism including
a plurality of cutting blades which are disposed so as to be spaced from each other at a predetermined widthwise interval and which cut the waste plastic material, and
a driving mechanism which hydraulically rotates the plurality of cutting blades.

8. A pulverization and grinding device comprising:
a pulverizing mechanism which pulverizes a raw material;
a feeder mechanism which feeds, by equal amounts, the raw material to the pulverizing mechanism;
a cyclone collector mechanism which collects, by an air stream, a powdered material obtained through the pulverization of the raw material performed by the pulverizing mechanism,
the pulverizing mechanism including
a housing,
a rotating body which has a cylindrical shape, which is rotatably housed in the housing, and which has a rotational shaft located at a center axis of the rotating body,
a plurality of cutting and grinding blades which are provided at equal intervals on an outer peripheral surface of the rotating body, each of the plurality of cutting and grinding blades including a blade member which cuts the raw material and a grinding part which is provided on a side surface of the blade member and which grinds the raw material, and
a rotational driving mechanism which is connected with the rotational shaft of the rotating body and which rotates the rotating body at high speed.

9. A recycled fiber-reinforced resin comprising:
pulverized pieces of a waste plastic material containing a fiber-reinforced resin and at least one type of impurity component selected from the group consisting of wood components, anticorrosive coating components, urethane components, and rubber components, the recycled fiber-reinforced resin having an average particle size of not less than 10 µm and not more than 50 µm.

10. A recycled resin composition at least comprising:
not less than 20 mass% and not more than 30 mass% of a recycled fiber-reinforced resin recited in claim 9; and
not less than 65 mass% and not more than 78 mass% of a plastic resin.

11. A recycled resin molded body comprising:
a recycled resin composition recited in claim 10.
